# EUROPÄISCHE PATENTSCHRIFT

(11) **EP 0 867 060 B1**
(45) Veröffentlichungstag und Bekanntmachung des Hinweises auf die Patenterteilung: **09.06.1999**
(21) Anmeldenummer: 96945896.7
(22) Anmeldetag: 25.11.1996
(51) Int. Cl.: H02J 1/00

(54) **STROMVERSORGUNG MIT VERLUSTARMER EINSCHALTSTROMBEGRENZUNG UND HOCHSETZSTELLERSCHALTUNG**
ELECTRICAL POWER SUPPLY WITH LOW-LOSS MAKING-CURRENT LIMITATION AND STEP-UP CONVERTER CIRCUIT
SYSTEME D'ALIMENTATION AVEC LIMITEUR DE COURANT D'ENCLENCHEMENT A FAIBLES PERTES ET CIRCUIT CONVERTISSEUR ELEVATEUR DE TENSION

(30) Priorität: 05.12.1995 DE 29519343 U
(43) Veröffentlichungstag der Anmeldung: 30.09.1998
(73) Patentinhaber: SIEMENS AKTIENGESELLSCHAFT, 80333 München (DE)
(72) Erfinder: RAMPOLD, Andreas, D-09648 Mittweida (DE)
(86) Internationale Anmeldenummer: DE9602261
(87) Internationale Veröffentlichungsnummer: WO9721263

(56) Entgegenhaltungen:
- EP-A- 0 637 118
- EP-A- 0 748 035
- US-A- 5 122 724
- US-A- 5 420 780

## Beschreibung

Bei Stromversorgungsgeraten müssen besondere Vorkehrungen getroffen werden, um die bei deren Einschaltung verursachten Netzbelastungen zu minimieren.

Aus dem Dokument Patent Abstracts Of Japan E-1387, June 24, 1993Vol. 17/No. 334, 5-38139 (A) ist eine Strombegrenzungsschaltung zur Begrenzung des Ladestroms eines zu dieser in Reihe liegenden Stützkondensators bei Spannungszuschaltung und bei Spannungsschwankungen bekannt. Dabei wird die Strombegrenzungsschaltung nicht vom Laststrom der durch den Stützkondensator gepufferten Last durchflossen.

Aus dem Dokument Patent Abstracts Of Japan E-811, August 24, 1989Vol. 17/No. 383, 1-133567 (A) ist eine weitere in Reihe zu einem Stützkondensator liegende Strombegrenzungsschaltung bekannt, welche ebenfalls nicht vom Laststrom einer nachgeschalteten Last durchflossen wird.

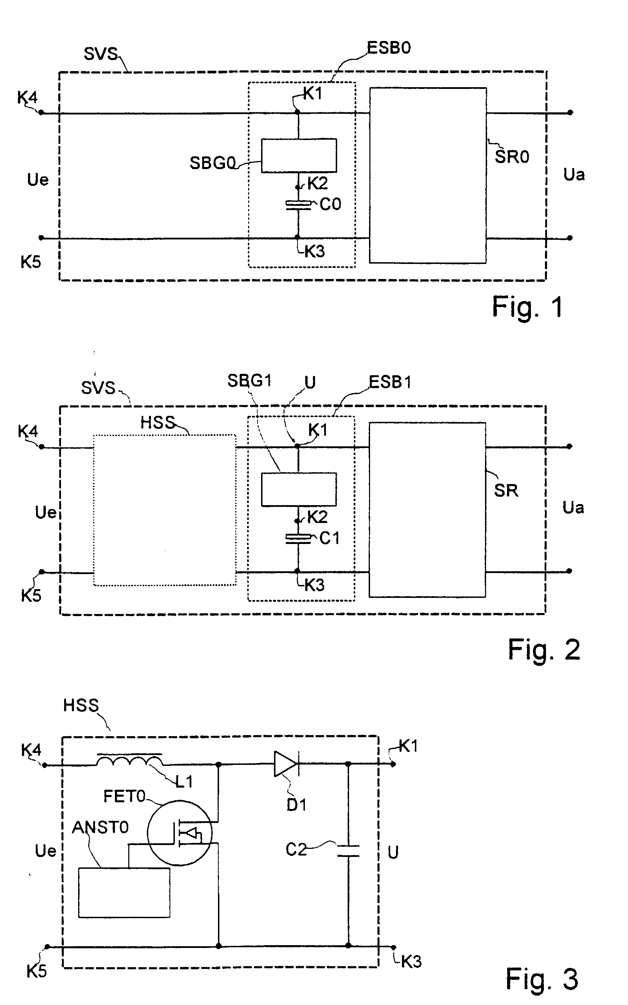

In der Figur 1 ist eine bekannte Stromversorgung SVS mit einer Eingangsspannung Ue und einer geregelten Ausgangsgleichspannung Ua dargestellt. Die Eingangsspannung Ue liegt entweder als Gleichspannung oder insbesondere als ungeglättete, am Ausgang eines nicht dargestellten Gleichrichters erzeugte Spannung vor. Einem in der Stromversorgung SVS enthaltenen Schaltregler SRO ist zwischen dessen Klemmen K1 und K3 eine Einschaltstrombegrenzung ESBO vorgeschaltet, welche eine in Reihe zu einem Stützkondensator C0 liegende Strombegrenzungsschaltung SBGO aufweist. Der Stützkondensator C0 dient insbesondere zur Überbrückung von kurzzeitigen Ausfällen der an den Eingangsklemmen K4 und K5 anliegenden Eingangsspannung Ue. Der Stützkondensator C0 weist in der Regel eine hohe Kapazität auf. Vorteilhaft eignen sich hierfür Elektrolytkondensatoren.

Vor einem Einschaltvorgang der Stromversorgung SVS ist der Stützkondensator CO im ungeladenen Zustand. Beim Einschaltvorgang wird dieser über die Eingangsspannung Ue in einen aufgeladenen Zustand versetzt. Die mit dem Stützkondensator C0 in Reihe geschaltete Strombegrenzungsschaltung SBG0 verhindert, daß der dabei benötigte Ladestrom zum Aufladen des Stützkondensators C1 zu hohe Spitzenwerte erreicht. Sobald dessen aufgeladener Zustand erreicht ist, nimmt die Strombegrenzungsschaltung SBGO einen niedrigen Innenwiderstand an. Der über die Eingangsklemmen K4 und K5 zu den Klemmen K1 und K3 des Schaltreglers SRO fließende Laststrom passiert dabei nicht die Strombegrenzungsschaltung SBGO und erzeugt dort keine weiteren Verluste.

Nachteil der Anordnung ist, daß die Einschaltstrombegrenzung ESB0 insgesamt eine erhöhte Impedanz, bzw. einen erhöhten Innenwiderstand aufweist, da in Reihe zum Stützkondensator C0 zusätzlich die Strombegrenzungsschaltung SBG0 liegt. Durch diese erhöhte Impedanz des Stützkondensators C0 werden dessen Glättungseigenschaften verschlechtert.

Besonders nachteilhaft ist, daß vom Schaltregler SR0 hervorgerufene überlagerte Störspannungen, wie beispielsweise sogenannte Ripple-Spannungen dementsprechend schlechter vom Stützkondensator C0 pufferbar sind und somit stärker an die Eingangsklemmen K4,K5 weitergegeben werden. Als Folge der verstärkt an die Eingangsklemmen K4,K5 weitergegebenen überlagerten Störspannungen kann somit eine aufwendigere Funkentstörung notwendig sein.

Aufgabe der Erfindung ist es, eine Stromversorgung mit einer Einschaltstrombegrenzung anzugeben, welche nur während des Ladevorganges des Stützkondensators wirksam ist und im normalen Betriebsfall einen möglichst niedrigen Innenwiderstand annimmt, aber keinen Laststrom aufnehmen muß, und welche die genannten Nachteile bezüglich Störspannungen umgeht.

Die Aufgabe wird gelöst mit der im Anspruch 1 vorgesehenen Stromversorgung.

Gemäß der Erfindung wird eine Stromversorgung mit einer Einschaltstrombegrenzung und verbesserten Puffereigenschaften des Stützkondensators angegeben, so daß die oben genannten Nachteile nicht auftreten. Hierzu ist der Einschaltstrombegrenzung der Stromversorgung erfindungsgemäß eine Hochsetzstellerschaltung vorgeschaltet.

Vorteil der Erfindung ist es, daß durch die vorgeschaltete Hochsetzstellerschaltung die erhöhte Störspannung an den Klemmen K1 und K3 der Einschaltstrombegrenzung nicht mehr an die Eingangsklemmen K4 und K5 des Schaltreglers weitergegeben wird, so daß vorteilhaft keine zusätzliche Entstörung mittels einem aufwendigen Funkentstörnetzwerk notwendig ist.

Ein weiterer Vorteil der Erfindung ist es, daß durch die der Einschaltstrombegrenzung vorgeschaltete Hochsetzstellerschaltung eine erhöhte Spannung an den Klemmen K1 und K3 anliegt. Schwankungen der Eingangsspannung Ue werden derart ausgeglichen, daß der Stützkondensator immer in den gleichen Aufladezustand versetzt wird. Dies hat zur Folge, daß eine stabile, von Schwankungen der Eingangsspannung Ue unabhängige, bekannte Stützzeit des Stützkondensators vorliegt.

Ein weiterer Vorteil durch die erfindungsgemäß der Einschaltstrombegrenzung vorgeschaltete Hochsetzstellerschaltung besteht darin, daß der Schaltregler durch die konstante Spannung an den Klemmen K1 und K3 nur einen kleinen Regelbereich aufzuweisen braucht.

Weitere vorteilhafte Ausführungsformen der Erfindung sind in den Unteransprüchen angegeben.

Die Erfindung wird desweiteren anhand der in den nachfolgend kurz angeführten Figuren dargestellten Ausführungsbeispielen weiter erläutert. Dabei zeigt
- FIG 1: beispielhaft eine bekannte Stromversorgung mit einem Schaltregler und einer vorgeschalteten Einschaltstrombegrenzung,
- FIG 2: beispielhaft eine erfindungsgemäße Stromversorgung mit einer Einschaltstrombegrenzung und einer zusätzlich vorgeschalteten Hochsetzstellerschaltung,
- FIG 3: beispielhaft eine Ausführungsform einer Hochsetzstellerschaltung, bzw. bei entsprechender Ansteuerung einer sogenannten Powerfactor-controller-Schaltung
- FIG 4: beispielhaft eine erste Ausführungsform einer Einschaltstrombegrenzung die mit einem Schalter vergleichbare Eigenschaften aufweist, und
- FIG 5 und FIG 6: beispielhafte weitere Ausführungsformen für Einschaltstrombegrenzungsschaltungen mit Stromquelleneigenschaften.

Figur 2 zeigt beispielhaft eine erfindungsgemäße Stromversorgung SVS mit einem Spannungsregler, welcher insbesondere in Form eines Schaltreglers SR1 vorliegen kann. Diesem ist dabei an den Klemmen K1 und K3 eine Einschaltstrombegrenzung ESB1 vorgeschaltet. Desweiteren ist der Einschaltstrombegrenzung ESB1 erfindungsgemäß eine zwischen den Eingangsklemmen K4, K5 und den Klemmen K1, K3 liegende Hochsetzstellerschaltung HSS vorgeschaltet. Durch die gemäß der Erfindung vorgeschaltete Hochsetzstellerschaltung HSS liegt eine gegenüber der Eingangsspannung Ue erhöhte Spannung U an den Klemmen K1 und K3 der Einschaltstrombegrenzung ESB1 an.

Durch die erhöhte Spannung U weist der in der Figur 2 dargestellte Stützkondensator C1 eine besonders gute, vorteilhafte Wirkungsweise auf. Insbesondere werden durch die Hochsetzstellerschaltung HSS Schwankungen der Eingangsspannung Ue derart ausgeglichen, daß der Stützkondensator C1 immer in den gleichen Aufladezustand versetzt wird. Dies hat zur Folge, daß eine stabile, von Schwankungen der Eingangsspannung Ue unabhängige bekannte Stützzeit des Stützkondensators C1 vorliegt.

Durch die vorgeschaltete Hochsetzstellerschaltung HSS wird die vom Schaltregler SR1 erzeugte und durch den Innenwiderstand der Strombegrenzungsschaltung SBG1 erhöhte Störspannung an den Klemmen K1,K3 nicht an die Eingangsklemmen K4 und K5 weitergegeben, so daß die Störspannung nicht durch zusätzliche Funkentstörnetzwerke unterdrückt zu werden braucht.

Figur 3 zeigt beispielhaft eine Ausführungsform einer Hochsetzstellerschaltung HSS. Die Hochsetzstellerschaltung HSS weist dabei eine Induktivität L1 und eine diesbezüglich in Reihe geschaltete Diode D1 auf, welche zwischen der Eingangsklemme K4 und der Klemme K1 liegen. Parallel zu den Klemmen K1,K3 weist die Hochsetzstellerschaltung HSS eine Kapazität C2 auf. Desweiteren sind mittels eines durch eine Ansteuerungsschaltung ANSTO ansteuerbaren Halbleiterschalters FETO die Eingangsklemme K4 bzw. die Klemme K1 gleichzeitig über die Induktivität L1 bzw. die Diode D1 mit der Eingangsklemme K5 bzw. der Klemme K3 elektrisch kurzschließbar. Insbesondere durch eine hochfrequente Taktrate der Ansteuerungsschaltung ANSTO ist gegenüber der an den Eingangsklemmen K4 und K5 liegenden Eingangsspannung Ue an der zwischen den Klemmen K1 und K3 liegenden Kapazität C2 eine erhöhte Spannung U erzeugbar.

Bei ungeglätteter, gleichgerichteter Wechselspannung an den Eingangsklemmen K4, K5 kann die Hochsetzstellerschaltung HSS durch eine entsprechende Ansteuerung mittels der Ansteuerungsschaltung ANSTO vorteilhaft in Form eines sogenannten "Power-factor-controller" vorliegen. Dabei erfolgt die Ansteuerung bevorzugt dergestalt, daß der von der Hochsetzstellerschaltung HSS aufgenommene Strom proportional zu der an den Eingangsklemmen K4 und K5 anliegenden Eingangsspannung Ue ist. Die in Form eines "Power-factor-controllers" vorliegende Hochsetzstellerschaltung HSS weist somit ein widerstandartiges Verhalten auf.

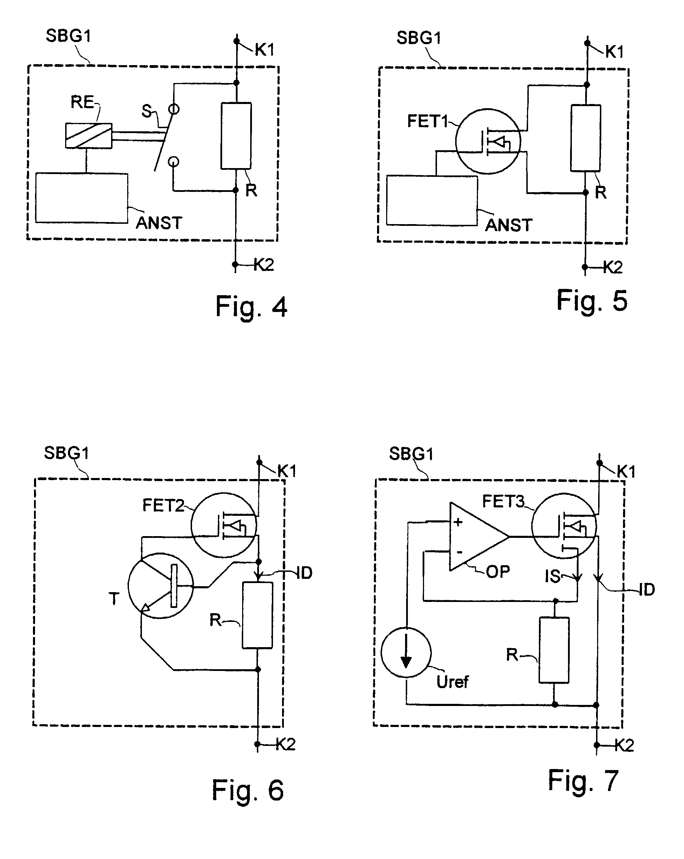

Figur 4 zeigt beispielhaft eine Ausführungsform der Strombegrenzungsschaltung SBG1 der erfindungsgemäßen Stromversorgung SVS. Dabei weist die Strombegrenzungsschaltung SBG1 mit einem Schalter S vergleichbare Eigenschaften auf. Die Einschaltstrombegrenzung SBG1 weist in Reihe zu dem in der Figur 2 dargestellten Stützkondensator C1 einen zwischen den Klemmen K1 und K2 angeordneten, überbrückbaren Widerstand R auf. In der Prinzipdarstellung der Figur 4 ist zur Überbrückung des Widerstands R ein Schalter S dargestellt, welcher von einer Ansteuerung ANST über ein Relais RE schaltbar ist.

Bei der in Figur 5 beispielhaft dargestellten Ausführungsform der Strombegrenzungsschaltung SBG1 ist der Widerstand R durch die Elektroden eines Halbleiterschaltelementes überbrückbar. Als Halbleiterschaltelement eignet sich insbesondere ein Feldeffekttransistor FET1, wie beispielsweise ein Metalloxyd-Feldeffekttransistor, durch dessen Drain- und Source-Anschluß der Widerstand R überbrückt wird. Eine Ansteuerung ANST bewirkt beim Einschaltvorgang der Stromversorgung SVS, daß sich der Feldeffekttransistor FET1 während des Aufladevorgangs des Stützkondensators C1 im gesperrten Zustand befindet. Nach Abschluß des Aufladevorgangs aktiviert die Ansteuerung ANST über den Gate-Anschluß den Feldeffekttransistor FET1, wodurch dieser leitend wird und den Widerstand nahezu kurzschließt.

Figur 6 zeigt beispielhaft eine weitere Ausführungsform der Strombegrenzungsschaltung SBG1 der erfindungsgemäßen Stromversorgung SVS. Dabei weist die Strombegrenzungsschaltung SBG1 Stromquelleneigenschaften auf. In Reihe zu dem in Figur 2 dargestellten Stützkondensator C1, ist bei der in Figur 6 dargestellten Ausführungsform zwischen den Klemmen K1 und K2, ein Feldeffekttransistor FET2, insbesondere ein Metalloxyd-Feldeffekttransistor, und ein Widerstand R angeordnet. Von der Klemme K1 ausgehend fließt der Drainstrom ID des Feldeffekttransistors FET2, welcher dem Ladestrom des Stützkondensators C1 entspricht über dessen Drain- und Source-Anschluß und über den Widerstand R zur Klemme K2. Die über diesem abfallende Spannung wird dem Basis- und Emitter-Anschluß eines Transistors T zugeführt, dessen Kollektor-Anschluß mit dem Gate-Anschluß des Feldeffekttransistors FET2 elektrisch verbunden ist, so daß die Schaltung SBG1 die Eigenschaften einer elektronisch geregelten Stromquelle annimmt.

Der maximal zulässige Ladestrom des Stützkondensators C1 ist durch die Basis-Emitter-Flußspannung des Transistors T und den Widerstand R festgelegt. Der zu Beginn des Einschaltvorgangs der Stromversorgung SVS auftretende hohe Ladestrom erzeugt als Drainstrom ID des Feldeffekttransistors FET2 einen entsprechend hohen Spannungsabfall am Widerstand R, wodurch der Transistor T einen leitenden Zustand annimmt. Die dadurch kurzgeschlossene Gate-Source-Spannung des Feldeffekttransistors FET2 erhöht dessen Drain-Source-Widerstand, wodurch der Drainstrom ID reduziert und die gewünschte Begrenzung des Kondensatorladestromes bewirkt wird.

Im normalen Betriebsfall befindet sich der Stützkondensator C1 im aufgeladenen Zustand und wird hauptsächlich durch Glättungsströme durchflossen, insbesondere von "Rippelströmen". Diese sind im Vergleich zum Ladestrom klein, so daß der Feldeffekttransistor FET2 einen leitenden Zustand beibehält. Die Einschaltstrombegrenzung SBG1 behält dadurch den im normalen Betriebsfall erwünschten niedrigen Innenwiderstand bei.

Figur 7 zeigt beispielhaft eine weitere vorteilhafte Ausführungsform der Strombegrenzungsschaltung SBG1, welche ebenfalls Stromquelleneigenschaften aufweist. Diese weist in Reihe zum Stützkondensator C1 einen zwischen den Klemmen K1 und K2 über den Drain- und Source-Anschluß angeordneten Sense-Feldeffekttransistor FET3 auf, welcher eine sogenannte Sense-Elektrode enthält. Über diese wird ein kleiner, zu dessen Drainstrom ID proportionaler Steuerstrom IS abgegriffen. Ein Operationsverstärker OP vergleicht den Wert einer den maximal zulässigen Ladestrom festlegende Referenzspannungsquelle Uref mit der durch den Steuerstrom IS am Widerstand R abfallenden Spannung und regelt den Gate-Anschluß des Sense-Feldeffekttransistors FET3 derart, daß die Schaltung SBG1 die Eigenschaften einer elektronisch geregelten Stromquelle annimmt.

Tritt während des Einschaltvorgangs der Stromversorgung SVS ein hoher Ladestrom des Stützkondensators C1 und damit ein hoher Drainstrom ID auf, so liegt am Operationsverstärker OP ein die Referenzspannung Uref übersteigendes Spannungspotential an. Dieses entsteht durch den über den Widerstand R fließenden, zum Drainstrom ID proportionalen Steuerstrom IS. In Folge nimmt der über den Operationsverstärker OP gesteuerte Sense-Feldeffekttransistor FET3 einen höheren Innenwiderstand an, wodurch die gewünschte Begrenzung des Ladestromes des Stützkondensators C1 bewirkt wird.

Vorteil der Anordnung ist, daß durch die gemäß der Erfindung der Einschaltstrombegrenzung ESB1 und dem Schaltregler SR1 vorgeschaltete Hochsetzstellerschaltung HSS und die damit bewirkte erhöhte Spannung U der Stützkondensator C1 erheblich verbesserte Stützeigenschaften bezüglich des Schaltreglers SR1 aufweist. Desweiteren ist durch die vorgeschaltete Hochsetzstellerschaltung HSS der Störeinfluß der vom Schaltregler SR1 hervorgerufenen Störspannungen erheblich geringer, so daß vorteilhaft keine zusätzliche Entstörung mittels einem aufwendigen Funkentstörnetzwerk notwendig ist.

## Patentansprüche

1. Stromversorgung (SVS) mit einem Spannungsregler (SR), insbesondere einem Schaltregler, und einer zwischen dessen Eingangsklemmen (K1, K3) vorgeschalteten Einschaltstrombegrenzung (ESB1), welche eine in Reihe zu einem Stützkondensator (C1) liegende Strombegrenzungsschaltung (SBG1) aufweist,
**dadurch gekennzeichnet,**
daß der Einschaltstrombegrenzung (ESB1) eine Hochsetzstellerschaltung (HSS) vorgeschaltet ist.

2. Vorrichtung nach Anspruch 1, wobei die Hochsetzstellerschaltung (HSS) als Power-factor-controller ausgeführt ist.

3. Vorrichtung nach einem der vorangegangenen Ansprüche, wobei die Strombegrenzungsschaltung (SBG1) einen in Reihe zum Stützkondensator (C1) angeordneten Widerstand (R) aufweist, welcher nach Abschluß des Einschaltvorganges der Stromversorgung (SVS) durch einen Feldeffekttransistor (FET1) überbrückt wird, der mittels einer Ansteuerung (ANST) aktivierbar ist.

4. Vorrichtung nach Anspruch 1 oder 2, wobei die Strombegrenzungsschaltung (SBG1)
a) in Reihe zum Stützkondensator (C1) einen Feldeffekttransistor (FET2) und einen Widerstand (R) aufweist, und
b) einen Transistor (T) aufweist, welcher so mit dem Feldeffekttransistor (FET2) und dem Widerstand (R) verschaltet ist, daß die Strombegrenzungsschaltung (SBG1) die Eigenschaften einer Stromquelle annimmt.

5. Vorrichtung nach Anspruch 4, wobei die am Widerstand (R) abfallende Spannung zur Steuerung des Transistors (T) dient.

6. Vorrichtung nach Anspruch 1 oder 2, wobei die Strombegrenzungsschaltung (SBG1)
a) in Reihe zum Stützkondensator (C1) einen Sense-Feldeffekttransistor (FET3) aufweist, welcher eine Sense-Elektrode enthält, über die ein zum Drainstrom (ID) des Sense-Feldeffekttransistors (FET3) proportionaler Steuerstrom (IS) abgegriffen wird, und
b) einen Operationsverstärker (OP), eine Referenzspannungsquelle (Uref) und einen Widerstand (R) aufweist, welche so mit dem Sense-Feldeffekttransistor (FET3) verschaltet sind, daß die Strombegrenzungsschaltung (SBG1) die Eigenschaften einer Stromquelle annimmt.

7. Vorrichtung nach Anspruch 6, wobei ein Eingang des Operationsverstärkers (OP) mit der Referenzspannungsquelle (Uref) verbunden ist, und einem weiteren Eingang des Operationsverstärkers (OP) eine Spannung zugeführt wird, welche durch den Steuerstrom (IS) des Sense-Feldeffekttransistors (FET3) am Widerstand (R) hervorgerufen wird.

## Claims

1. Electrical power supply (EPS) having a voltage regulator (SR), preferably a switching regulator, and an inrush current limiter (ICL1), which is connected upstream between the input terminals (T1, T3) of said regulator and has a current limiting circuit (CL1) connected in series with a backup capacitor (C1),
characterized
in that a step-up converter circuit (SUC) is connected upstream of the inrush current limiter (ICL1).

2. Apparatus according to Claim 1, in which the step-up converter circuit (SUC) is designed as a power factor controller.

3. Apparatus according to one of the preceding claims, in which the current limiting circuit (CL1) has a resistor (R) which is arranged in series with the backup capacitor (C1) and is bridged by a field-effect transistor (FET1) at the end of the switch-on process of the electrical power supply (EPS), which transistor can be activated by means of a drive arrangement (DRV).

4. Apparatus according to Claim 1 or 2, in which the current limiting circuit (CL1)
a) has a field-effect transistor (FET2) and a resistor (R) in series with the backup capacitor (C1), and
b) has a transistor (T), which is connected up to the field-effect transistor (FET2) and the resistor (R) in such a way that the current limiting circuit (CL1) assumes the properties of a current source.

5. Apparatus according to Claim 4, in which the voltage drop across the resistor (R) is used to control the transistor (T).

6. Apparatus according to Claim 1 or 2, in which the current limiting circuit (CL1)
a) has, in series with the backup capacitor (C1), a sense field-effect transistor (FET3) containing a sense electrode via which a control current (IS) proportional to the drain current (ID) of the sense field-effect transistor (FET3) is picked off, and
b) has an operational amplifier (OP), a reference voltage source (Vref) and a resistor (R), which are connected up to the sense field-effect transistor (FET3) in such a way that the current limiting circuit (CL1) assumes the properties of a current source.

7. Apparatus according to Claim 6, in which one input of the operational amplifier (OP) is connected to the reference voltage source (Vref), and a voltage caused by the control current (IS) of the sense field-effect transistor (FET3) across the resistor (R) is fed to a further input of the operational amplifier (OP).

## Revendications

1. Alimentation en courant (SVS), comprenant un régulateur de tension (SR), notamment un régulateur à commutation, et un limiteur de courant d'enclenchement (ESB1), qui est branché du côté amont entre les bornes d'entrée (K1, K3) de ce régulateur et qui comporte un circuit limiteur de courant (SBG1) monté en série avec un condensateur de maintien (C1), caractérisée par le fait qu'un convertisseur élévateur de tension (HSS) est branché du côté amont du limiteur de courant d'enclenchement (ESB1).

2. Dispositif selon la revendication 1, dans lequel le convertisseur élévateur de tension (HSS) est réalisé sous la forme d'un Power-factor-controller.

3. Dispositif selon l'une des revendications précédentes, dans lequel le limiteur de courant d'enclenchement (SBG1) comporte une résistance (R) qui est montée en série avec le condensateur de maintien (C1) et qui est court-circuitée après la fin de l'opération d'enclenchement de l'alimentation en courant (SVS) par un transistor à effet de champ (FET1), qui peut être activé au moyen d'une commande (ANST).

4. Dispositif selon la revendication 1 ou 2, dans lequel le limiteur de courant d'enclenchement (SBG1) comporte
a) en série avec le condensateur de maintien (C1), un transistor à effet de champ (FET2) et une résistance (R), et
b) un transistor (T) qui est raccordé au transistor à effet de champ (FET2) et à la résistance (R) de telle sorte que le circuit limiteur de courant (SBG1) a les propriétés d'une source de courant.

5. Dispositif selon la revendication 4, dans lequel la tension chutant à la résistance (R) sert à la commande du transistor (T).

6. Dispositif selon la revendication 1 ou 2, dans lequel le circuit limiteur de courant (SBG1) comporte
a) en série avec le condensateur de maintien (C1) un transistor à effet de champ Sense (FET3), qui comporte une électrode Sense par l'intermédiaire de laquelle un courant de commande (IS) proportionnel au courant de drain (ID) du transistor à effet de champ Sense (FET3) est prélevé, et
b) un amplificateur opérationnel (OP), une source de tension de référence (Uref) et une résistance (R), qui sont raccordés au transistor à effet de champ Sense (FET3) de façon que le circuit limiteur de courant (SBG1) a les propriétés d'une source de courant.

7. Dispositif selon la revendication 6, dans lequel une entrée de l'amplificateur opérationnel (OP) est reliée à la source de tension de référence (Uref) et une autre entrée de l'amplificateur opérationnel (OP) reçoit une tension qui est engendrée à la résistance (R) par le courant de commande (IS) du transistor à effet de champ Sense (FET3).
